# EUROPÄISCHE PATENTANMELDUNG

(11) **EP 4 574 462 A1**
(43) Veröffentlichungstag der Anmeldung: **25.06.2025**
(21) Anmeldenummer: 24221156.3
(22) Anmeldetag: 18.12.2024
(51) Int. Cl.: B60C 11/12

(54) **FAHRZEUGREIFEN**

(30) Priorität: 20.12.2023 DE 102023213015
(71) Anmelder: Continental Reifen Deutschland GmbH, 30175 Hannover (DE)
(72) Erfinder: Wüst, Alexander, 30175 Hannover (DE); Lacko, Peter, 020 01 Púchov (SK)
(74) Vertreter: Continental Corporation

(57) **Zusammenfassung**

Die Erfindung betrifft einen Fahrzeugreifen mit einem Laufstreifen mit einer Profilrippe (1, 1') mit Einschnitten (3, 3'), wobei jeder Einschnitt (3, 3'), in Draufsicht betrachtet, zumindest über einen Hauptabschnitt (6, 6') gewellt verläuft und sich im Hauptabschnitt (6, 6') aus jeweils über eine halbe Wellenlänge (A/2) verlaufenden Sektoren (6a, 6b, 6c, 6a', 6b', 6c') zusammensetzt.

Die Amplitude (A_{c}, A_{c}') der zwei randseitigen Sektoren (6c, 6c') stimmt überein und nimmt ausgehend von den randseitigen Sektoren (6c, 6c') in übereinstimmender Weise in Richtung zum mittigen Sektor bzw. zu den mittigen Sektoren (6a, 6a') jeweils ab oder jeweils zu.

## Beschreibung

Die Erfindung betrifft einen Fahrzeugreifen, insbesondere Nutzfahrzeugreifen, mit einem Laufstreifen mit zumindest einer Profilrippe mit in Draufsicht zur axialen Richtung unter einem Winkel von 0° bis zu 50° verlaufenden Einschnitten mit einer Breite von 0,40 mm bis 1,60 mm und einer maximalen Tiefe von 70% bis 100% der Profiltiefe, wobei jeder Einschnitt, in Draufsicht betrachtet, zumindest über einen Hauptabschnitt gewellt verläuft, wobei der Hauptabschnitt eine Wellenmittellinie aufweist und sich der Einschnitt im Hauptabschnitt aus jeweils über eine halbe Wellenlänge sowie an einer der Seiten der Wellenmittellinie verlaufenden Sektoren mit jeweils einer Amplitude zusammensetzt, wobei zu den Sektoren zwei randseitige Sektoren, bei einer ungeraden Anzahl an Sektoren ein einziger mittiger Sektor, bei einer geraden Anzahl an Sektoren zwei mittige Sektoren und zwischen jedem randseitigen Sektor und dem bzw. dem jeweiligen mittigen Sektor jeweils ein einziger seitlicher Sektor oder jeweils eine übereinstimmende Anzahl an seitlichen Sektoren gehören, wobei aufeinanderfolgende Sektoren vorgesehen sind, bei welchen sich die Amplitude von Sektor zu Sektor schrittweise ändert.

Ein derartiger Fahrzeugreifen ist beispielsweise aus der DE 10 2005 058 365 A1 bekannt. Der Fahrzeugreifen weist einen Laufstreifen mit Profilblöcken auf, in welchen in Draufsicht wellenförmig verlaufende Einschnitte ausgebildet sind. Die Einschnitte weisen jeweils einen progressiv zunehmenden Amplitudenverlauf auf, sodass die Einschnitte jeweils aus über eine halbe Wellenlänge verlaufenden Sektoren gebildet sind, über welche die Amplitude schrittweise zunimmt. Die progressiv zunehmende Amplitude ermöglicht längs der Zunahme eine zunehmende Versteifung der Profilbockelemente, die im Bereich der Maxima eine ausreichende Versteifung ermöglichen soll und in einem relativ langen Bereich mit reduzierter Amplitude ein deutliches Aufklappen der Einschnitte beim Durchlaufen des Latsches gestattet, was im Hinblick auf den Schneegriff günstig ist.

Ein weiterer Fahrzeugreifen der eingangs genannten Art ist aus der EP 1 529 662 A1 bekannt. Der Fahrzeugreifen weist einen Laufstreifen mit Profilpositiven auf, welche mit im Wesentlichen in axialer Richtung sowie wellenförmig verlaufenden Einschnitten versehen sind. Die Einschnitte weisen eine Amplitude auf, welche in einer der Erstreckungsrichtungen der Einschnitte zunimmt, wobei beim Ausführungsbeispiel je über eine halbe Wellenlänge verlaufende Sektoren vorgesehen sind und die Zunahme der Amplitude schrittweise von Sektor zu Sektor erfolgt. Diese Einschnitte sollen unter Wirkung von Querkräften die Profilpositive versteifen und unter Aufrechterhaltung guter Griffeigenschaften die Handlingeigenschaften verbessern.

Bei Fahrzeugreifen der eingangs genannte Art sind die wellenförmig verlaufenden Einschnitte für die Griffeigenschaften, insbesondere auf Schnee, von Vorteil, wobei sich vor allem unter seitlich wirkenden Kräften die Einschnittwänden auf eine für die Steifigkeit des Laufstreifenprofils vorteilhafte Weise gegenseitig aneinander abstützen. Mit der Profilierung des Laufstreifens einhergehende lokale Steifigkeitsunterschiede in den Profilpositiven, welche etwa durch in Draufsicht wellenförmig verlaufende Umfangsrillen oder durch ein unregelmäßige Profilblockform auftreten, werden aktuell nicht optimal ausgeglichen, sodass die Gefahr eines ungleichmäßigen Laufstreifenabriebs erhöht ist.

Der Erfindung liegt daher die Aufgabe zugrunde, bei einem Fahrzeugreifen der eingangs genannten Art die Gefahr des Auftretens eines ungleichmäßigen Laufstreifenabriebs merklich zu reduzieren.

Gelöst wird die gestellte Aufgabe erfindungsgemäß dadurch, dass die Amplitude der zwei randseitigen Sektoren überstimmt und ausgehend von den randseitigen Sektoren in übereinstimmender Weise in Richtung zum mittigen Sektor bzw. zu den mittigen Sektoren jeweils abnimmt oder jeweils zunimmt.

Durch die getroffenen Maßnahmen ist Steifigkeit der Profilpositive gezielt und über den Querschnitt gleichmäßig beeinflusst, wodurch Steifigkeitsunterschiede derart ausbalanciert sind, dass der Laufstreifenabrieb deutlich vergleichmäßigt ist.

Gemäß einer bevorzugten Ausführung sind seitliche Sektoren vorgesehen, deren Amplitude mit der Amplitude von einem der unmittelbar anschließenden Sektoren übereinstimmt. Dies sorgt für eine bestimmte Steifigkeitsbeeinflussung über einen etwas größeren lokalen Bereich der Profilrippe.

Gemäß einer weiteren bevorzugten Ausführung ist zwischen jedem randseitigen Sektor und dem bzw. dem jeweiligen mittigen Sektor jeweils eine übereinstimmende Anzahl an seitlichen Sektoren vorgesehen, wobei die Amplituden sämtlicher seitlicher Sektoren übereinstimmen.

Eine vorteilhafte Weiterentwicklung besteht darin, dass zwischen der Amplitude der seitlichen Sektoren und der Amplitude des mittigen Sektors bzw. der mittigen Sektoren eine in Millimeter angegebene erste Differenz und zwischen der Amplitude der seitlichen Sektoren und der Amplitude der randseitigen Sektoren eine in Millimeter angegebene zweite Differenz vorliegt, wobei die erste Differenz von der zweiten Differenz um höchstens 0,10 mm abweicht und bevorzugter Weise die erste Differenz mit der zweiten Differenz übereinstimmt.

Gemäß einer weiteren bevorzugten Ausführung ist die Ab- bzw. Zunahme der Amplitude schrittweise über den seitlichen Sektor bzw. sämtliche seitliche Sektoren fortgeführt. Dies sorgt für eine im Hinblick auf ein gleichmäßiges Abriebbild vorteilhafte, kontinuierliche Beeinflussung der Steifigkeit.

Eine weitere bevorzugte Ausführung ist dadurch gekennzeichnet, dass die Sektoren - in Draufsicht betrachtet und bezogen auf die Einschnittmittellinie - zumindest abschnittsweise sowie im Bereich der Amplituden in Form von Kreisbögen mit je einem Radius verlaufen, wobei der Radius umso größer ist, je kleiner die Amplitude ist. Dies trägt ebenfalls zu einer gleichmäßigen Einflussnahme auf die Steifigkeit bei.

Bei der letztgenannten bevorzugten Ausführung ist gemäß einer vorteilhaften Weiterentwicklung vorgesehen, dass je zwei Tangenten, welche an den zu einem

Sektor gehörenden Kreisbogen angelegt sind und durch die zwei Enden des jeweiligen Kreisbogens verlaufen, miteinander einen Schnittpunkt aufweisen, wobei sämtliche an derselben Seite der Wellenmittellinie liegende Schnittpunkte auf einer parallel zur Wellenmittellinie verlaufenden Hilfslinie liegen. Bei derart konstruierten Einschnitten ist die Wellenform und damit die Einflussnahme auf die Steifigkeit besonders genau und einfach justierbar.

Bevorzugter Weise beträgt die Amplitude des Sektors bzw. der Sektoren mit der größten Amplitude 1,0 mm bis 2,5 mm. Dies ist vor allem für die mit der gegenseitigen Abstützung der Einschnittwände einhergehenden lokalen Steifigkeitszunahme vorteilhaft.

Eine weitere bevorzugte Ausführung sieht vor, dass die Amplitude des Sektors bzw. der Sektoren mit der kleinsten Amplitude 25% bis 75%, insbesondere 35% bis 65%, bevorzugt 45% bis 55%, der Amplitude des Sektors bzw. der Sektoren mit der größten Amplitude beträgt. Dies sorgt dafür, dass innerhalb des Einschnitts Abstützungseffekte auftreten, welche im Hinblick auf das Ausmaß der Steifigkeitsbeeinflussung besonders vorteilhaft variieren.

Bevorzugter Weise durchqueren die Einschnitte die Profilrippe. Bekannter Weise sind solche Einschnitte etwa für die Entwässerung des Laufstreifens günstig. Da an solche Einschnitte angrenzende Profilsegmente - gegenüber Profilsegmenten, welche an innerhalb der Profilrippe endenden Einschnitten angrenzen - eine höhere "Beweglichkeit" beim Abrollen aufweisen, lassen sich mit den Einschnitten derart besonders vorteilhafte Effekte im Hinblick auf die Steifigkeit erzielen.

Die Einflussnahme auf die Steifigkeit ist besonders gleichmäßig, wenn die Einschnitte, in Draufsicht betrachtet, jeweils drehsymmetrisch bezüglich einer in radialer Richtung verlaufenden Achse ausgeführt sind, wobei die Einschnitte durch eine Drehung um 180° auf sich selbst abgebildet werden. Solche Einschnitte sind vor allem bei mittleren Profilrippen, welche bezüglich einer in Umfangsrichtung umlaufenden Rippenmittellinie eine symmetrische Gestalt aufweisen und an welche beidseitig in Draufsicht wellenförmig verlaufende Umfangsrillen angrenzen, günstig.

Gemäß einer weiteren bevorzugten Ausführung setzen sich die Einschnitte, in Draufsicht betrachtet, aus jeweils zwei miteinander fluchtend verlaufenden Randabschnitten und dem Hauptabschnitt, welcher zwischen den Randabschnitten verläuft, zusammen, wobei der Hauptabschnitt über zumindest 50%, bevorzugt über zumindest 60%, besonders bevorzugt über 70% bis 95%, der auf die Einschnittmittellinie bezogenen, in die axiale Richtung projizierten Länge des Einschnitts verläuft. Die Randabschnitte tragen zu einem gleichmäßigen Abriebbild bei.

Eine weitere bevorzugten Ausführung ist dadurch gekennzeichnet,
- dass die Wellenlängen der Sektoren innerhalb des Einschnitts übereinstimmen oder
- dass die Wellenlängen der Sektoren innerhalb des Einschnitts von den randseitigen Sektoren in übereinstimmender Weise in Richtung zum mittigen Sektor bzw. zu den mittigen Sektoren abnehmen oder zunehmen, wobei die größte(n) Wellenlänge(n) vorzugsweise höchstens 150%, bevorzugt höchstens 130%, der kleinsten Wellenlänge(n) beträgt bzw. betragen.

Bevorzugter Weise verlaufen zwischen jedem randseitigen Sektor und dem bzw. dem jeweiligen mittigen Sektor jeweils zwei bis fünf seitliche Sektoren.

Ferner ist es bevorzugt, wenn sich der Einschnitt zwischen den Einschnittkanten und dem Einschnittgrund, im Querschnitt betrachtet, in radialer Richtung aus einem radial äußeren Abschnitt, einem in radialer Richtung über seine gesamte Erstreckung in Wellenform verlaufenden, gewellten Abschnitt und einem radial inneren Abschnitt zusammensetzt, wobei der gewellte Abschnitt vorzugsweise über mehr als eine Wellenlänge verläuft. Dies trägt zu einer Verbesserung der Abstützungseffekte bei und sorgt in Kombination mit der in Draufsicht vorliegenden, speziellen Amplitudenvariation für eine in radialer Richtung verstärkte Einflussnahme auf die Steifigkeit.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1a eine Draufsicht auf einen Umfangsabschnitt einer mittleren Profilrippe eines Laufstreifens eines Nutzfahrzeugreifens mit einer ersten Ausführungsvariante der Erfindung,
Fig. 1b eine Schrägansicht auf eine Visualisierung eines Einschnitts (Abzugskörper des Einschnitts),
Fig. 1c eine vergrößerte Draufsicht auf eine visualisierte Einschnittmittelfläche,
Fig. 1d einen vergrößerten Schnitt entlang der Linie Id-Id der Fig. 1a,
Fig. 2a eine Draufsicht auf einen Umfangsabschnitt einer mittleren Profilrippe eines Laufstreifens eines Nutzfahrzeugreifens mit einer zweiten Ausführungsvariante der Erfindung,
Fig. 2b eine Schrägansicht auf eine Visualisierung eines Einschnitts (Abzugskörper des Einschnitts) und
Fig. 2c eine vergrößerte Draufsicht auf eine visualisierte Einschnittmittelfläche.

Gemäß der Erfindung ausgeführte Fahrzeugreifen sind Reifen für Kraftfahrzeuge, insbesondere für mehrspurige Kraftfahrzeuge, sowie bevorzugt Nutzfahrzeugreifen, besonders bevorzugt Nutzfahrzeugreifen in Radialbauart für Felgen mit einem Felgendurchmesser von 17,5, 19,5 oder 22,5 Zoll.

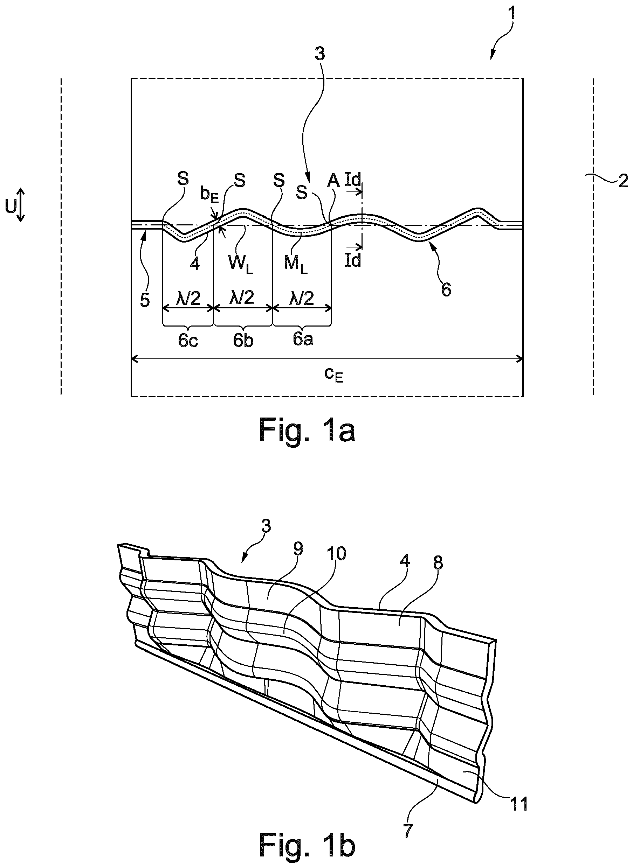

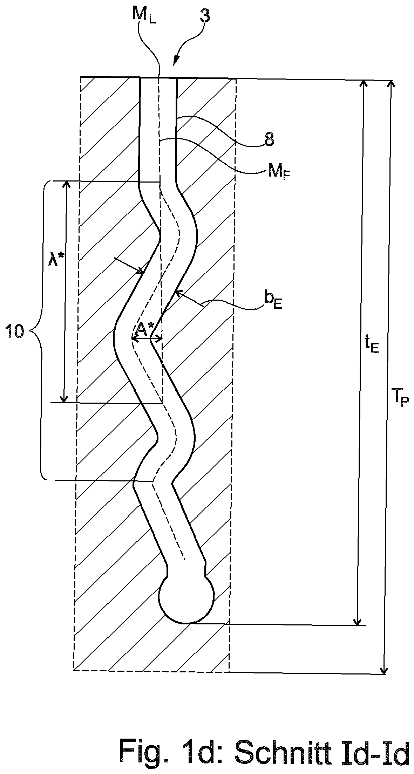

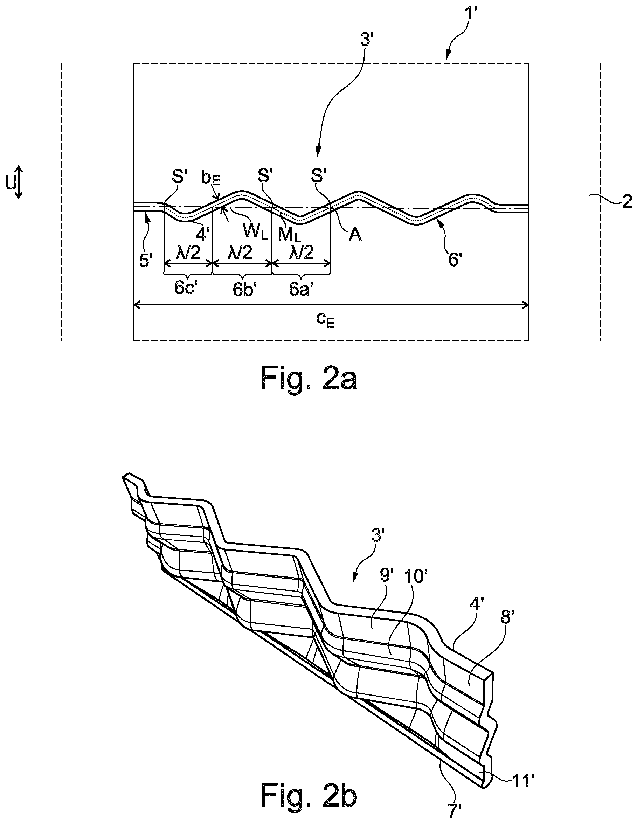

Fig. 1a und Fig. 2a zeigen je eine Draufsicht auf einen Umfangsabschnitt einer in Umfangsrichtung umlaufenden, mittleren Profilrippe 1 (Fig. 1a), 1' (Fig. 2a) eines Laufstreifens eines Nutzfahrzeugreifens. Die Umfangsrichtung des Nutzfahrzeugreifens ist durch einen Doppelpfeil U angedeutet. Die mittlere Profilrippe 1, 1' ist seitlich durch je eine Umfangsrille 2 begrenzt, welche in radialer Richtung auf die jeweils vorgesehene Profiltiefe T_{P} (angedeutet in Fig. 1d) ausgeführt ist, wobei die Profiltiefe T_{P} bei Nutzfahrzeugreifen üblicherweise 9,0 mm bis 26,0 mm beträgt. Sind verschieden tief ausgeführte Umfangsrillen 2 vorgesehen, wird unter der Profiltiefe T_{P} die Tiefe der tieferen Umfangsrille 2 verstanden.

In der mittleren Profilrippe 1, 1' ist eine Anzahl von über den Umfang der Profilrippe 1, 1' verteilt angeordneten Einschnitten 3 (Profilrippe 1), 3' (Profilrippe 1') ausgebildet, wobei im gezeigten Umfangsabschnitt ein einziger Einschnitt 3, 3' vorgesehen ist. Innerhalb der Profilrippe 1, 1' unmittelbar aufeinanderfolgende Einschnitte 3, 3' weisen in Umfangsrichtung als kleinstmögliche Abstände ermittelte Abstände von vorzugsweise 20,0 mm bis 50,0 mm auf.

Der Einschnitt 3, 3' ist, in Draufsicht betrachtet, drehsymmetrisch bezüglich einer in radialer Richtung verlaufenden Achse A (erscheint in Fig. 1a und Fig. 2a als Punkt) ausgeführt, wobei der Einschnitt 3, 3' durch eine Drehung um 180° auf sich selbst abgebildet wird. Der Einschnitt 3, 3' durchquert die mittlere Profilrippe 1, 1', mündet daher in die Umfangsrillen 2 ein, erstreckt sich, in Draufsicht betrachtet, insgesamt gerade sowie beim den Ausführungsbeispielen in axialer Richtung, weist zwei an der Laufstreifenperipherie liegende Einschnittkanten 4 (Einschnitt 3), 4' (Einschnitt 3') auf und setzt sich aus zwei gerade sowie miteinander fluchtend verlaufenden Randabschnitten 5 (Einschnitt 3), 5' (Einschnitt 3') und einem in Wellenform verlaufenden Hauptabschnitt 6, 6' zusammen.

Gemäß Fig. 1b und Fig. 2b ist der Einschnitt 3 (Fig. 1b), 3' (Fig. 2b) durch einen beim Ausführungsbeispiel kanalförmigen, gerade verlaufenden Einschnittgrund 7, 7' und zwei von den Einschnittkanten 5, 5' ausgehenden Einschnittwänden 8, 8' begrenzt (vergl. Fig. 1d für Einschnitt 3). Wie Fig. 1a und Fig. 2a zeigen, weist der Einschnitt 3, 3' eine an der Laufstreifenperipherie liegende, in Draufsicht dem Einschnittverlauf folgende, zu den Einschnittkanten 4, 4' übereinstimmend beabstandete Einschnittmittellinie M_{L} und eine von dieser ausgehende, zu den Einschnittwänden 8, 8' übereinstimmend beabstandete Einschnittmittelfläche M_{F} (Fig. 1d: Einschnitt 3) auf.

Der Einschnitt 3, 3' weist eine als kleinstmöglichen Abstand zwischen den Einschnittwänden 8, 8' ermittelte, also senkrecht zur Einschnittmittelfläche M_{F} (Fig. 1d) gemessene, Breite b_{E} (Fig. 1a, Fig. 2a, Fig. 1d) von 0,40 mm bis 1,60 mm, insbesondere von bis zu 1,20 mm, bevorzugt von bis zu 0,80 mm, eine auf die Einschnittmittellinie M_{L} bezogene, in axialer Richtung projizierte Länge c_{E} (Fig. 1a, Fig. 2a) und in radialer Richtung eine maximale Tiefe t_{E} (Tiefe an der tiefsten Stelle, Fig. 1d: Einschnitt 3) von 70% bis 100% der Profiltiefe T_{P} (Fig. 1d) auf, wobei die maximale Tiefe t_{E} insbesondere höchstens der um 0,5 mm verringerten Profiltiefe T_{P} beträgt und wobei - wie Fig. 1b und Fig. 2b zeigen - der Einschnitt 3, 3' bei den Ausführungsbeispielen über die gesamte Länge c_{E} (Fig. 1a, Fig. 2a) auf die maximale Tiefe t_{E} ausgeführt ist.

Wie Fig. 1a und Fig. 2a zeigen, weist der Hauptabschnitt 6, 6' eine an der Laufstreifenperipherie liegende, in Draufsicht gerade sowie mittig durch die Randabschnitte 5, 5' verlaufende Wellenmittellinie W_{L} auf, wobei der Einschnitt 3, 3', bezogen auf die Wellenmittellinie W_{L}, in axialer Richtung verläuft. Die Einschnittmittellinie M_{L} und die Wellenmittellinie W_{L} fallen im Bereich der Randabschnitte 5, 5' zusammen und schneiden einander an Schnittpunkten S, S'. Die bereits erwähnte Achse A verläuft bei den gezeigten Ausführungsbeispielen durch einen der Schnittpunkte S (Fig. 1a: Einschnitt 3), S' (Fig. 2a: Einschnitt 3').

Der Hauptabschnitt 6, 6' verläuft, in Draufsicht betrachtet, über zumindest 50%, bevorzugt über zumindest 60%, besonders bevorzugt über 70% bis 95%, der Länge c_{E} des Einschnitts 3, 3' sowie ferner in einer Wellenform und setzt sich - in Draufsicht betrachtet sowie ausgehend von der Achse A - aus zwei an der Achse A aneinander anschließenden, mittigen Sektoren 6a, 6a', zwei seitlichen Sektoren 6b, 6b' und zwei randseitigen Sektoren 6c, 6c' zusammen. Die Unterteilung in die Sektoren 6a, 6b, 6c bzw. 6a', 6b', 6c' erfolgt an den jeweiligen Schnittpunkten S (Einschnitt 3), S' (Einschnitt 3') sowie senkrecht zur Wellenmittellinie W_{L}, sodass jeder Sektor 6a, 6b, 6c, 6a', 6b', 6c' an der einen Seite der Wellenmittellinie W_{L} sowie über eine halbe Wellenlänge λ/2 verläuft und an der Wellenmittellinie W_{L} endet. Die Wellenlänge A kann ausgehend von den randseitigen Sektoren 6c, 6c' in übereinstimmender Weise in Richtung zu den mittigen Sektoren 6a, 6a' abnehmen oder zunehmen, wobei die größten Wellenlängen λ höchstens 150%, bevorzugt höchstens 130%, der kleinsten Wellenlängen λ betragen. Alternativ können die Größen der Wellenlängen λ der Sektoren 6a, 6b, 6c, 6a',6b', 6c' innerhalb des Einschnitts 3, 3' übereinstimmen.

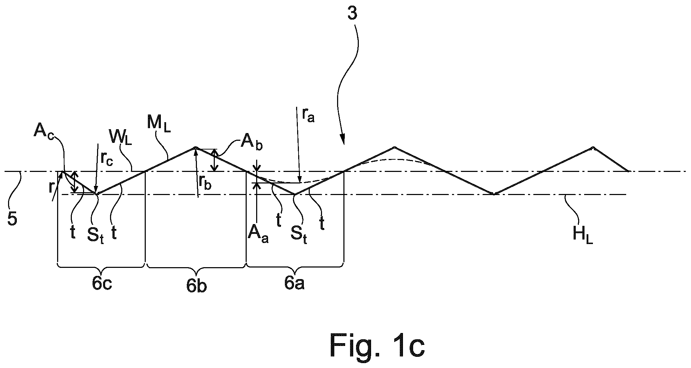

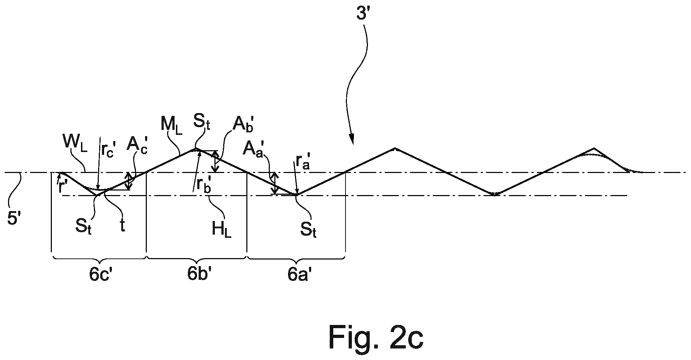

Fig. 1c und Fig. 2c zeigen je eine schematische Draufsicht, bei welcher vom Einschnitt 3, 3' (Fig. 1c: Einschnitt 3, Fig. 2c: Einschnitt 3') lediglich die Einschnittmittellinie M_{L} und die Wellenmittellinie W_{L} gezeigt sind. Jeder mittige Sektor 6a, 6a' weist eine Amplitude Aₐ, Aₐ', jeder seitliche Sektor 6b, 6b' weist eine Amplitude A_{b}, A_{b}' und jeder randseitige Sektor 6c, 6c' weist eine Amplitude A_{c}, A_{c}' auf, wobei die Amplituden Aₐ, A_{b}, A_{c}, Aₐ', A_{b}', A_{c}' auf die Einschnittmittellinie M_{L} und die Wellenmittellinie W_{L} bezogen sind.

Nachfolgend wird unter Bezugnahme auf Fig. 1c die Ausführung des Einschnitts 3 weiter erläutert.

Die Amplitude A_{c} jedes randseitigen Sektors 6c beträgt 1,0 mm bis 2,5 mm. Die Amplitude Aₐ jedes mittigen Sektors 6a beträgt 25% bis 75%, insbesondere 35% bis 65%, bevorzugt 45% bis 55%, der Amplitude A_{c}. Die Amplitude A_{b} jedes seitlichen Sektors 6b stimmt mit der Amplitude A_{c} überein. Beim gezeigten Ausführungsbeispiel verläuft jeder mittiger Sektor 6a - bezogen auf die Einschnittmittellinie M_{L} - in Form eines Kreisbogens mit einem Radius rₐ und die Sektoren 6b, 6c verlaufen im Bereich der Amplituden A_{b}, A_{c} abschnittsweise jeweils in Form eines Kreisbogens mit einem Radius r_{b} (Sektor 6b), r_{b} (Sektor 6c), wobei die Radien r_{b}, r_{c} übereinstimmen und jeweils kleiner sind als der Radius rₐ, sodass der Radius rₐ, r_{b}, r_{c} bei kleinerer Amplitude Aₐ, A_{b}, A_{c} größer ist. Ferner ist am gegenseitigen Anschluss der randseitigen Sektoren 6c zum jeweiligen Randabschnitt 5 - bezogen auf die Einschnittmittellinie M_{L} - ein Übergangsradius r ausgebildet. Die Größen der Radien rₐ, r_{b}, r_{c}, r und die Größen der zugehörigen Bogenlängen sind derart gewählt, dass die Einschnittmittellinie M_{L} frei von Knickstellen ist. Ferner ist die Ausgestaltung des Einschnitts 6 bevorzugt derart, dass je zwei Tangenten t, welche an den zu einem Sektor 6a, 6b, 6c gehörenden Kreisbogen angelegt sind und durch die zwei Enden des jeweiligen Kreisbogens verlaufen, miteinander einen Schnittpunkt St aufweisen, wobei sämtliche an derselben Seite der Wellenmittellinie W_{L} liegende Schnittpunkte St auf einer parallel zur Wellenmittellinie W_{L} verlaufenden Hilfslinie H_{L} liegen.

Nachfolgend wird unter Bezugnahme auf Fig. 2c die Ausführung des Einschnitts 3' weiter erläutert.

Die Amplitude Aₐ' jedes mittigen Sektors 6a' beträgt 1,0 mm bis 2,5 mm. Die Amplitude A_{c}' jedes randseitigen Sektors 6c' beträgt 25% bis 75%, insbesondere 35% bis 65%, bevorzugt 45% bis 55%, der Amplitude Aₐ'. Die Amplitude A_{b}' jedes seitlichen Sektors 6b' ist kleiner als die Amplitude Aₐ' und größer als die Amplitude A_{c}'.Bevorzugter Weise weicht die in Millimeter angegebene Differenz zwischen der Amplitude A_{b}' und der Amplitude Aₐ' von der in Millimeter angegebenen Differenz zwischen der Amplitude A_{b}' und der Amplitude A_{c}' um höchstens 0,10 mm ab. Besonders bevorzugter Weise stimmen diese beiden Differenzen überein. Beim gezeigten Ausführungsbeispiel verlaufen die Sektoren 6a', 6b', 6c' - bezogen auf die Einschnittmittellinie M_{L} - abschnittsweise im Bereich der Amplituden Aₐ', A_{b}', A_{c}' jeweils in Form eines Kreisbogens mit einem Radius rₐ', r_{b}', r_{b}', wobei der Radius rₐ', r_{b}', r_{c}' bei kleinerer Amplitude Aₐ', A_{b}', A_{c}' größer ist. Ferner ist am gegenseitigen Anschluss der randseitigen Sektoren 6c' zum jeweiligen Randabschnitt 5' - bezogen auf die Einschnittmittellinie M_{L} - ein Übergangsradius r' ausgebildet. Die Größen der Radien rₐ', r_{b}', r_{c}', r' und die Größen der zugehörigen Bogenlängen sind derart gewählt, dass die Einschnittmittellinie M_{L} frei von Knickstellen ist. Ferner ist die Ausgestaltung des Einschnitts 6' bevorzugt derart, dass je zwei Tangenten t, welche an den zu einem Sektor 6a', 6b', 6c' gehörenden Kreisbogen angelegt sind und durch die zwei Enden des jeweiligen Kreisbogens verlaufen, miteinander einen Schnittpunkt St aufweisen, wobei sämtliche an derselben Seite der Wellenmittellinie W_{L} liegende Schnittpunkte St auf einer parallel zur Wellenmittellinie W_{L} verlaufenden Hilfslinie H_{L} liegen.

Gemäß Fig. 1b und Fig. 2b setzt sich der Einschnitt 3, 3' - und daher der Hauptabschnitt 6, 6' und die Randabschnitte 5, 5' - im Bereich zwischen den Einschnittkanten 4, 4' und dem Einschnittgrund 7, 7' in radialer Richtung aus einem radial äußeren Abschnitt 9, 9', einem in radialer Richtung über seine gesamte Erstreckung in Wellenform verlaufenden, gewellten Abschnitt 10, 10' und einem radial inneren Abschnitt 11, 11' zusammen. Die in radialer Richtung vorliegende Wellenform des gewellten Abschnitts 10, 10' ist im Hauptabschnitt 6 von dessen in Draufsicht vorliegender Wellenform überlagert.

Wie Fig. 1d für den Einschnitt 3 zeigt, weist der Abschnitt 10, 10' eine Wellenlänge λ* auf und verläuft über mehr als eine Wellenlänge λ*, wobei die zugehörige Amplitude A* innerhalb des Abschnitts 10, 10' konstant ist oder variieren kann. Der radial innere Abschnitt 11, 11' verläuft, im Querschnitt betrachtet - bedingt durch die in Draufsicht vorliegende Wellenform des Hauptabschnitts 6, 6' und den in Draufsicht vorliegenden geraden Verlauf der Randabschnitte 5, 5' - im Bereich des Hauptabschnitts 6, 6' zur radialen Richtung geneigt und/oder zumindest abschnittsweise gebogen und im Bereich der Randabschnitte 5, 5' gerade. Der radial innere Abschnitt 11, 11' sorgt im Bereich des Hauptabschnitts 6, 6' für eine "Rückführung" der in Draufsicht vorliegenden Wellenform des Hauptabschnitts 6, 6' zum gerade verlaufenden Einschnittgrund 7, 7'. Ferner sorgt der radial innere Abschnitt 11, 11' für eine "Rückführung" der in radialer Richtung vorliegenden Wellenform des Abschnitts 10, 10' zum gerade verlaufenden Einschnittgrund 7, 7'.

Die Erfindung ist auf die beschriebenen Ausführungsbeispiele nicht beschränkt.

Die Einschnitte 3, 3' können auch in schulterseitigen Profilrippen vorgesehen sein. Die Profilrippen können mit Querrillen in Profilblöcke strukturiert sein. Die Randabschnitte 5, 5' sind optional, sodass jeder Einschnitt 3, 3' ausschließlich aus dem Hauptabschnitt 6, 6' gebildet sein kann. Die kanalförmige Ausführung des Einschnittgrunds 7, 7' ist ebenfalls optional, sodass der Einschnittgrund 7, 7', im Querschnitt betrachtet, beispielsweise gerade und parallel zur Laufstreifenperipherie verlaufen kann.

Die Einschnitte 3, 3' können, in Draufsicht betrachtet, bezogen auf die Wellenmittellinie W_{L} gebogen (bogenförmig, kreisbogenartig) oder gerade verlaufen sowie ein- oder beidseitig innerhalb der jeweiligen Profilrippe enden. Bei schulterseitigen Profilrippen werden unter durchquerenden Einschnitten 3, 3' solche verstanden, welche die schulterseitigen Profilrippen zumindest innerhalb der Bodenaufstandsfläche durchqueren. Die Bodenaufstandsfläche entspricht dem statisch ermittelten Footprint (ermittelt mit einem auf einer Normfelge montierten Reifen, Last bei 70% der maximalen Tragfähigkeit, Innendruck 85% des Normdruckes, gemäß ETRTO-Standards). Die Einschnitte 3, 3' verlaufen, in Draufsicht betrachtet, zur axialen Richtung unter einem Winkel von 0° bis 50°, insbesondere von 5° bis 45°, besonders bevorzugt von 20° bis 40°, wobei sich der Winkel bei Einschnitten 3, 3' mit gerade verlaufender Wellenmittellinie W_{L} auf die Wellenmittellinie W_{L} und bei Einschnitten 3, 3' mit gebogen (bogenförmig, kreisbogenartig) verlaufender Wellenmittellinie W_{L} auf eine die Enden der Wellenmittellinie M_{L} verbindende gerade Linie bezieht. Ferner verlaufen die Einschnitte 3, 3' vorzugsweise zumindest in Gruppen und insbesondere zumindest innerhalb der Profilrippe parallel zueinander.

### Bezugszeichenliste

- 1, 1': mittlere Profilrippe
- 2: Umfangsrille
- 3, 3': Einschnitt
- 4, 4': Einschnittkante
- 5, 5': Randabschnitt
- 6, 6': Hauptabschnitt
- 6a, 6a': mittiger Sektor
- 6b, 6b': seitlicher Sektor
- 6c, 6c': randseitiger Sektor
- 7, 7': Einschnittgrund
- 8, 8': Einschnittwand
- 9, 9': radial äußerer Abschnitt
- 10, 10': Abschnitt
- 11, 11': radial innerer Abschnitt
- A: Achse
- Aₐ, A_{b}, A_{c}: Amplitude
- Aₐ', A_{b}', A_{c}': .....Amplitude
- A*: Amplitude
- b_{E}: Breite
- C_{E}: Länge
- H_{L}: Hilfslinie
- M_{F}: Einschnittmittelfläche
- M_{L}: Einschnittmittellinie
- rₐ, r_{b}, r_{c}: Radius
- rₐ', r_{b}', r_{c}': Radius
- r, r': Übergangsradius
- S, S': Schnittpunkt
- Sₜ: Schnittpunkt
- t: Tangente
- t_{E}: maximale Tiefe
- T_{P}: Profiltiefe
- U: Doppelpfeil (Umfangsrichtung)
- W_{L}: Wellenmittellinie
- λ, λ*: Wellenlänge

## Patentansprüche

1. Fahrzeugreifen, insbesondere Nutzfahrzeugreifen, mit einem Laufstreifen mit zumindest einer Profilrippe (1, 1 ') mit in Draufsicht zur axialen Richtung unter einem Winkel von 0° bis zu 50° verlaufenden Einschnitten (3, 3') mit einer Breite (b_{E}) von 0,40 mm bis 1,60 mm und einer maximalen Tiefe (t_{E}) von 70% bis 100% der Profiltiefe (T_{P}), wobei jeder Einschnitt (3, 3'), in Draufsicht betrachtet, zumindest über einen Hauptabschnitt (6, 6') gewellt verläuft, wobei der Hauptabschnitt (6, 6') eine Wellenmittellinie (W_{L}) aufweist und sich der Einschnitt (3, 3') im Hauptabschnitt (6, 6') aus jeweils über eine halbe Wellenlänge (λ/2) sowie an einer der Seiten der Wellenmittellinie (W_{L}) verlaufenden Sektoren (6a, 6b, 6c, 6a', 6b', 6c') mit jeweils einer Amplitude (Aₐ, A_{b}, A_{c}, Aₐ', A_{b}', A_{c}') zusammensetzt, wobei zu den Sektoren (6a, 6b, 6c, 6a', 6b', 6c') zwei randseitige Sektoren (6c, 6c'), bei einer ungeraden Anzahl an Sektoren (6a, 6b, 6c, 6a', 6b', 6c') ein einziger mittiger Sektor (6a, 6a'), bei einer geraden Anzahl an Sektoren (6a, 6b, 6c, 6a', 6b', 6c') zwei mittige Sektoren (6a, 6a') und zwischen jedem randseitigen Sektor (6c, 6c') und dem bzw. dem jeweiligen mittigen Sektor (6a, 6a') jeweils ein einziger seitlicher Sektor (6b, 6b') oder jeweils eine übereinstimmende Anzahl an seitlichen Sektoren (6b, 6b') gehören, wobei aufeinanderfolgende Sektoren (6a, 6b, 6c, 6a', 6b', 6c') vorgesehen sind, bei welchen sich die Amplitude (Aₐ, A_{b}, A_{c}, Aₐ', A_{b}', A_{c}') von Sektor (6a, 6b, 6c, 6a', 6b', 6c') zu Sektor (6a, 6b, 6c, 6a', 6b', 6c') schrittweise ändert,
**dadurch gekennzeichnet,**
**dass** die Amplitude (A_{c}, A_{c}') der zwei randseitigen Sektoren (6c, 6c') überstimmt und ausgehend von den randseitigen Sektoren (6c, 6c') in übereinstimmender Weise in Richtung zum mittigen Sektor bzw. zu den mittigen Sektoren (6a, 6a') jeweils abnimmt oder jeweils zunimmt.

2. Fahrzeugreifen nach Anspruch 1, **dadurch gekennzeichnet, dass** seitliche Sektoren (6b) vorgesehen sind, deren Amplitude (A_{b}) mit der Amplitude (Aₐ, A_{c}) von einem der unmittelbar anschließenden Sektoren (6a, 6c) übereinstimmt.

3. Fahrzeugreifen nach Anspruch 1 oder 2, **dadurch gekennzeichnet, dass** zwischen jedem randseitigen Sektor (6c, 6c') und dem bzw. dem jeweiligen mittigen Sektor (6a, 6a') jeweils eine übereinstimmende Anzahl an seitlichen Sektoren (6b, 6b') vorgesehen ist, wobei die Amplituden (A_{b}') sämtlicher seitlicher Sektoren (6b') übereinstimmen.

4. Fahrzeugreifen
nach Anspruch 1, wobei zwischen jedem randseitigen Sektor (6c, 6c') und dem bzw. dem jeweiligen mittigen Sektor (6a, 6a') jeweils ein einziger seitlicher Sektor (6b, 6b') vorgesehen ist oder
nach Anspruch 3,
**dadurch gekennzeichnet, dass** zwischen der Amplitude (A_{b}') der seitlichen Sektoren (6b') und der Amplitude (Aₐ') des mittigen Sektors bzw. der mittigen Sektoren (6a') eine in Millimeter angegebene erste Differenz und zwischen der Amplitude (A_{b}') der seitlichen Sektoren (6b') und der Amplitude (A_{c}') der randseitigen Sektoren (6c, 6c') eine in Millimeter angegebene zweite Differenz vorliegt, wobei die erste Differenz von der zweiten Differenz um höchstens 0,10 mm abweicht und bevorzugter Weise die erste Differenz mit der zweiten Differenz übereinstimmt.

5. Fahrzeugreifen nach Anspruch 1, **dadurch gekennzeichnet, dass** die Ab- bzw. Zunahme der Amplitude (Aₐ', A_{b}', A_{c}') schrittweise über den seitlichen Sektor (6b') bzw. sämtliche seitliche Sektoren (6b') fortgeführt ist.

6. Fahrzeugreifen nach einem der Ansprüche 1 bis 5, **dadurch gekennzeichnet, dass** die Sektoren (6a, 6b, 6c, 6a', 6b', 6c') - in Draufsicht betrachtet und bezogen auf die Einschnittmittellinie (M_{L}) - zumindest abschnittsweise sowie im Bereich der Amplituden (Aₐ, A_{b}, A_{c}, Aₐ', A_{b}', A_{c}') in Form von Kreisbögen mit je einem Radius (rₐ, r_{b}, r_{c}, rₐ', r_{b}', r_{c}') verlaufen, wobei der Radius (rₐ, r_{b}, r_{c}, rₐ', r_{b}', r_{c}') umso größer ist, je kleiner die Amplitude (Aₐ, A_{b}, A_{c}, Aₐ', A_{b}', A_{c}') ist.

7. Fahrzeugreifen nach Anspruch 6, **dadurch gekennzeichnet, dass** je zwei Tangenten (t), welche an den zu einem Sektor (6a, 6b, 6c, 6a', 6b', 6c') gehörenden Kreisbogen angelegt sind und durch die zwei Enden des jeweiligen Kreisbogens verlaufen, miteinander einen Schnittpunkt (St) aufweisen, wobei sämtliche an derselben Seite der Wellenmittellinie (W_{L}) liegende Schnittpunkte (St) auf einer parallel zur Wellenmittellinie (W_{L}) verlaufenden Hilfslinie (H_{L}) liegen.

8. Fahrzeugreifen nach einem der Ansprüche 1 bis 7, **dadurch gekennzeichnet, dass** die Amplitude (A_{c}, Aₐ') des Sektors bzw. der Sektoren (6c, 6a') mit der größten Amplitude (A_{c}, Aₐ') 1,0 mm bis 2,5 mm beträgt.

9. Fahrzeugreifen nach einem der Ansprüche 1 bis 8, **dadurch gekennzeichnet, dass** die Amplitude (Aₐ, A_{c}') des Sektors bzw. der Sektoren (6a, 6c') mit der kleinsten Amplitude (Aₐ, A_{c}') 25% bis 75%, insbesondere 35% bis 65%, bevorzugt 45% bis 55%, der Amplitude (A_{c}, Aₐ') des Sektors bzw. der Sektoren (6c, 6a') mit der größten Amplitude (A_{c}, Aₐ') beträgt.

10. Fahrzeugreifen nach einem der Ansprüche 1 bis 9, **dadurch gekennzeichnet, dass** die Einschnitte (3, 3') die Profilrippe (1, 1') durchqueren.

11. Fahrzeugreifen nach einem der Ansprüche 1 bis 10, **dadurch gekennzeichnet, dass** die Einschnitte (3, 3'), in Draufsicht betrachtet, jeweils drehsymmetrisch bezüglich einer in radialer Richtung verlaufenden Achse (A) ausgeführt sind, wobei die Einschnitte (3, 3') durch eine Drehung um 180° auf sich selbst abgebildet werden.

12. Fahrzeugreifen nach einem der Ansprüche 1 bis 11, **dadurch gekennzeichnet, dass** sich die Einschnitte (3, 3'), in Draufsicht betrachtet, aus jeweils zwei miteinander fluchtend verlaufenden Randabschnitten (5, 5') und dem Hauptabschnitt (6, 6'), welcher zwischen den Randabschnitten (3, 3') verläuft, zusammensetzen, wobei der Hauptabschnitt (6, 6') über zumindest 50%, bevorzugt über zumindest 60%, besonders bevorzugt über 70% bis 95%, der auf die Einschnittmittellinie (M_{L}) bezogenen, in die axiale Richtung projizierten Länge (c_{E}) des Einschnitts (3, 3') verläuft.

13. Fahrzeugreifen nach einem der Ansprüche 1 bis 12, **dadurch gekennzeichnet,**
- **dass** die Wellenlängen (λ) der Sektoren (6a, 6b, 6c, 6a',6b', 6c') innerhalb des Einschnitts (3, 3') übereinstimmen oder
- **dass** die Wellenlängen (λ) der Sektoren (6a, 6b, 6c, 6a',6b', 6c') innerhalb des Einschnitts (3, 3') von den randseitigen Sektoren (6c, 6c') in übereinstimmender Weise in Richtung zum mittigen Sektor bzw. zu den mittigen Sektoren (6a, 6a') abnehmen oder zunehmen, wobei die größte(n) Wellenlänge(n) vorzugsweise höchstens 150%, bevorzugt höchstens 130%, der kleinsten Wellenlänge(n) beträgt bzw. betragen.

14. Fahrzeugreifen nach einem der Ansprüche 1 bis 13, **dadurch gekennzeichnet, dass** zwischen jedem randseitigen Sektor (6c, 6c') und dem bzw. dem jeweiligen mittigen Sektor (6a, 6a') jeweils zwei bis fünf seitliche Sektoren (6b, 6b') verlaufen.

15. Fahrzeugreifen nach einem der Ansprüche 1 bis 14, **dadurch gekennzeichnet, dass** sich der Einschnitt (3, 3') zwischen den Einschnittkanten (5, 5') und dem Einschnittgrund (7, 7'), im Querschnitt betrachtet, in radialer Richtung aus einem radial äußeren Abschnitt (9, 9'), einem in radialer Richtung über seine gesamte Erstreckung in Wellenform verlaufenden, gewellten Abschnitt (10, 10') und einem radial inneren Abschnitt (11, 11') zusammensetzt, wobei der gewellte Abschnitt (10, 10') vorzugsweise über mehr als eine Wellenlänge (λ*) verläuft.
